# EUROPEAN PATENT APPLICATION

(11) **EP 4 640 762 A1**
(43) Date of publication of application: **29.10.2025**
(21) Application number: 23907317.4
(22) Date of filing: 27.09.2023
(51) Int. Cl.: C08L 67/04, C08G 63/06, C08J 5/18, B29C 48/08, B29C 55/02, B29C 71/02

(54) **BIODEGRADABLE FILM HAVING HIGH BARRIER PROPERTIES AND LOW NOISE LEVEL, AND BIODEGRADABLE RESIN COMPOSITION FOR SAME**

(30) Priority: 23.12.2022 KR 20220183028
(71) Applicant: SK microworks Co., Ltd., Chungcheongbuk-do 27818 (KR)
(72) Inventor: YEON, Jewon, Suwon-si, Gyeonggi-do 16336 (KR); OH, Mi Ok, Suwon-si, Gyeonggi-do 16336 (KR); PARK, Sang Kuk, Suwon-si, Gyeonggi-do 16336 (KR); HAN, Kweon Hyung, Suwon-si, Gyeonggi-do 16336 (KR)
(74) Representative: Dehns
(86) International application number: PCT/KR2023/015111
(87) International publication number: WO 2024/136031

(57) **Abstract**

An embodiment relates to: a biodegradable resin composition comprising a first resin containing a polylactic acid-based resin and a second resin containing a polyhydroxyalkanoate-based resin; a biodegradable film or biodegradable molded product comprising same; and a method for preparing same. The biodegradable film can be biaxially stretched and can simultaneously improve flexibility, barrier properties, and noise level, and thus can be applied to various fields such as high-quality, ecofriendly packaging materials.

## Description

### Technical Field

The present invention relates to a biodegradable film with high barrier properties and low noise levels, a biodegradable molded article and a process for preparing the same, and a biodegradable resin composition therefor.

### Background Art

Non-biodegradable plastic films or non-biodegradable plastic molded articles have been widely used as packaging materials. To make up for the shortcomings of these non-degradable plastic films, biodegradable films or biodegradable molded articles comprising polylactic acid films, which are aliphatic polyesters with high biodegradability of the resin itself, have been variously adopted in recent years. A polylactic acid film has good mechanical properties, while it lacks flexibility and has a characteristic of being easily broken (brittleness) due to its unique crystal structure as a semi-crystalline polymer, has a slow crystallization rate and a long molding time, resulting in low productivity, and has low gas and moisture barrier properties and high noise generation, whereby its use is limited.

Accordingly, in order to manufacture a polylactic acid film, it is important to ensure that it has the crystallinity, crystal particle size, penetration barrier properties, mechanical properties, transparency, and heat shrinkability appropriate for its intended use.

To improve this problem, Japanese Laid-open Patent Publication No. 2006-272712 discloses a method of preparing a film using a biodegradable aliphatic polyester alone other than polylactic acid. In such a case, not only is the glass transition temperature so low that it is not easy to prepare a film using a biaxial stretching method, but also the mechanical strength of a final film is low and the heat shrinkage rate is high, causing many problems during the processing thereof.

### Disclosure of Invention

### Technical Problem

In order to solve the problems of the prior art described above, an embodiment of the present invention aims to provide a biodegradable resin composition comprising a first resin comprising a polylactic acid-based resin and a second resin comprising a polyhydroxyalkanoate-based resin.

Another embodiment aims to provide a biodegradable film comprising the biodegradable resin composition and a process for preparing the same.

Another embodiment aims to provide a biodegradable molded article comprising the biodegradable resin composition.

### Solution to Problem

In order to accomplish the above object, an embodiment provides a biodegradable resin composition, which comprises a first resin comprising a polylactic acid-based resin; and a second resin comprising a polyhydroxyalkanoate-based resin, wherein the polyhydroxyalkanoate-based resin comprises a 3-hydroxyhexanoate (3-HH) repeat unit, and the biodegradable resin composition comprises the second resin in an amount of 10% by weight to 30% by weight based on the total weight of the first resin and the second resin.

Another embodiment provides a biodegradable film, which comprises the biodegradable resin composition and has a moisture permeability of 100 g/m²/day to 500 g/m²/day and an air permeability of 100 cc/m²/day to 750 cc/m²/day.

Another embodiment provides a process for preparing a biodegradable film, which comprises melt-extruding a biodegradable resin composition comprising a first resin comprising a polylactic acid-based resin; and a second resin comprising a polyhydroxyalkanoate-based resin to prepare a sheet; stretching the melt-extruded sheet to prepare a film; and heat-setting the stretched film, wherein the polyhydroxyalkanoate-based resin comprises a 3-hydroxyhexanoate (3-HH) repeat unit, and the biodegradable resin composition comprises the second resin in an amount of 10% by weight to 30% by weight based on the total weight of the first resin and the second resin.

Another embodiment aims to provide a biodegradable molded article, which comprises the biodegradable resin composition.

### Advantageous Effects of Invention

The biodegradable film comprising the biodegradable resin composition according to an embodiment is capable of being biaxially stretched, and the flexibility, barrier properties, and noise levels of the biodegradable film can be improved at the same time. Accordingly, the biodegradable film according to an embodiment can be used in various fields as a packaging film, as well as a packaging material, thereby providing a high-quality, environmentally friendly packaging material.

In addition, the process for preparing a biodegradable film according to an embodiment is a simple, economical, and efficient manufacturing process, and it can provide a biodegradable film with excellent flexibility, barrier properties, and noise levels.

Further, the biodegradable molded article comprising the biodegradable resin composition according to an embodiment can improve flexibility, barrier properties, and noise levels, thereby diversifying the applications of the biodegradable molded article.

### Brief Description of Drawings

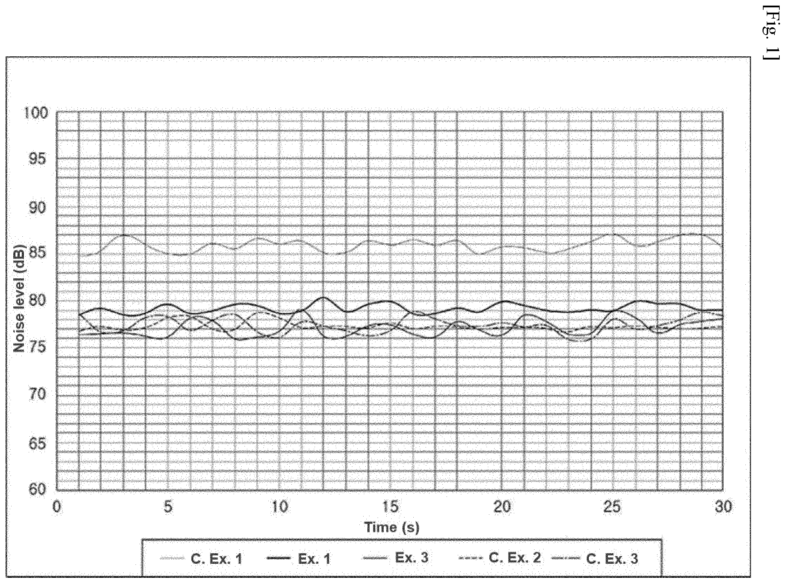

Fig. 1 shows the results of noise level measurements of the biodegradable films of the examples and comparative examples of the present invention.

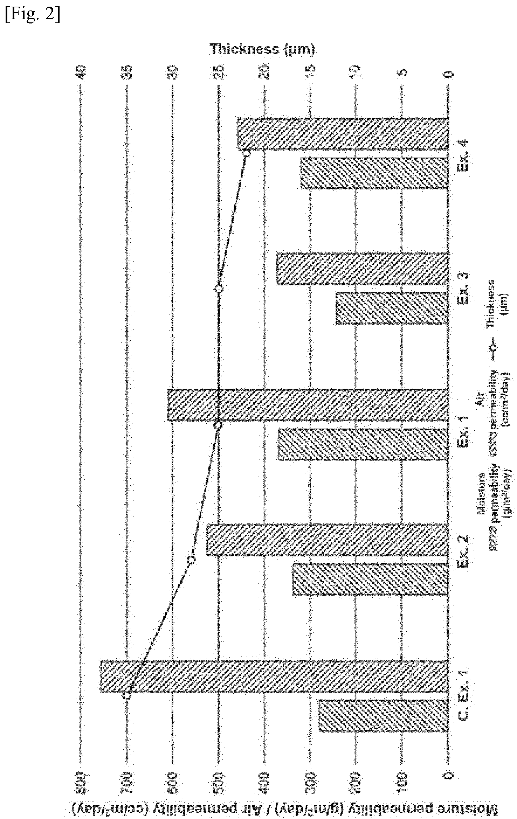

Fig. 2 shows the thickness and barrier properties (moisture permeability and air permeability) of the biodegradable films of the examples and comparative examples of the present invention.

### Best Mode for Carrying out the Invention

Hereinafter, the present invention will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, reaction conditions, and the like of elements used herein are to be understood as being modified by the term "about" unless otherwise indicated.

Throughout the present specification, the terms first, second, third, and the like are used to describe various components. But the components should not be limited by the terms. The terms are used only for the purpose of distinguishing one component from another.

In the present specification, the weight average molecular weight of a polymer resin refers to the weight average molecular weight (Mw) measured by gel permeation chromatography (GPC, using tetrahydrofuran as an eluting solvent). It is usually not described with units, but it may be understood that it has a unit of g/mole or Da.

### Biodegradable resin composition

The biodegradable resin composition according to an embodiment of the present invention comprises a first resin comprising a polylactic acid-based resin; and a second resin comprising a polyhydroxyalkanoate-based resin, wherein the polyhydroxyalkanoate-based resin comprises a 3-hydroxyhexanoate (3-HH) repeat unit, and the biodegradable resin composition comprises the second resin in an amount of 10% by weight to 30% by weight based on the total weight of the first resin and the second resin.

The first resin comprises a polylactic acid-based resin.

The polylactic acid (PLA)-based resin may have a weight average molecular weight (Mw) of 100,000 to 1,000,000, 100,000 to 800,000, 100,000 to 500,000, or 100,000 to 300,000. The weight average molecular weight (Mw) may be measured by gel permeation chromatography (GPC). When the weight average molecular weight (Mw) of the polylactic acid-based resin satisfies the above range, the mechanical and optical properties of a biodegradable film or a biodegradable molded article comprising the biodegradable resin composition can be further enhanced.

The polylactic acid-based resin may comprise L-lactic acid, D-lactic acid, D,L-lactic acid, or a combination thereof. Specifically, the polylactic acid-based resin may be a random copolymer of L-lactic acid and D-lactic acid.

Here, the content of D-lactic acid may be, for example, 1% by weight to 5% by weight, 2% by weight to 4% by weight, 1% by weight to 2% by weight, 1% by weight to 1.5% by weight, or 2% by weight to 3% by weight, based on the total weight of the polylactic acid-based resin. When the content of D-lactic acid satisfies the above range, it may be advantageous from the viewpoint of enhancement in film stretching processability.

The content of L-lactic acid may be, for example, 80% by weight to 99% by weight, 85% by weight to 99% by weight, 95% by weight to 99% by weight, 96% by weight to 98% by weight, 96% by weight to 97% by weight, or 98.5% by weight to 99% by weight, based on the total weight of the polylactic acid-based resin. When the content of L-lactic acid satisfies the above range, it may be advantageous from the viewpoint of enhancement in the characteristics of thermal resistance of a film.

The polylactic acid-based resin may have a melting temperature (Tm) of 100°C to 250°C, 110°C to 220°C, 115°C to 210°C, or 120°C to 200°C.

The polylactic acid-based resin may have a glass transition temperature (Tg) of 30°C to 80°C, 40°C to 80°C, 40°C to 70°C, or 45°C to 65°C.

The polylactic acid-based resin may have a melt viscosity (V_{PLA}) at 210°C of 4,500 poise to 17,000 poise, 5,000 poise to 12,000 poise, 6,500 poise to 12,000 poise, 6,500 poise to 11,000 poise, 7,000 poise to 12,000 poise, 7,500 poise to 11,000 poise, or 8,000 poise to 10,000 poise. In such an event, the melt viscosity may be measured using a rheometer (RDS) under conditions of 1 to 400 rad/s, for example, under conditions of about 100 rad/s.

According to an embodiment, the content of the first resin may be 55% by weight or more, 60% by weight or more, 65% by weight or more, or 70% by weight or more, and may be 95% by weight or less, 90% by weight or less, 85% by weight or less, or 80% by weight or less, based on the total weight of the first resin and the second resin. Specifically, the first resin may be employed in an amount of, for example, 55% by weight to 95% by weight, 60% by weight to 90% by weight, 70% by weight to 90% by weight, or 70% by weight to 80% by weight, based on the total weight of the first resin and the second resin.

When the content of the first resin is within the above range, the mechanical properties and optical properties such as haze of the biodegradable resin composition and a biodegradable film or biodegradable molded article comprising the same can be enhanced, brittleness can be reduced and flexibility can be increased to prevent breaking or cracking, and noise levels can be reduced.

In particular, since the first resin is brittle, when a film comprising the same is used at a temperature range of 20°C or lower, the film tends to become hard. When the film is subjected to an impact in winter, it tends to crack and break easily. In addition, when a film comprising the first resin is used at a temperature range of 35°C or higher, the film tends to lose elasticity and become mushy, and its noise levels become high, whereby its use is limited.

Accordingly, an embodiment can improve the physical properties and noise levels of a film comprising the first resin alone by introducing the second resin into the first resin.

The second resin comprises a polyhydroxyalkanoate-based resin.

The polyhydroxyalkanoate (PHA)-based resin may be a homopolymer or a copolymer. According to an embodiment, the polyhydroxyalkanoate-based resin may be a homopolymer or copolymer comprising a 3-hydroxyhexanoate (3-HH) repeat unit. The polyhydroxyalkanoate (PHA)-based resin has soft properties. When a second resin comprising the same is mixed with the first resin comprising a highly crystalline polylactic acid (PLA)-based resin, the soft nature of the polyhydroxyalkanoate (PHA)-based resin reduces the crystallinity of the entire mixed resin, thereby reducing the noise levels of a film prepared using the mixed resin.

The polyhydroxyalkanoate-based resin may further comprise at least one repeat unit selected from the group consisting of 2-hydroxybutyrate (2-HB), 3-hydroxybutyrate (3-HB), 3-hydroxypropionate (3-HP), 3-hydroxyvalerate (3-HV), 3-hydroxyheptanoate (3-HHep), 3-hydroxyoctanoate (3-HO), 3-hydroxynonanoate (3-HN), 3-hydroxydecanoate (3-HD), 3-hydroxydodecanoate (3-HDd), 4-hydroxybutyrate (4-HB), 4-hydroxyvalerate (4-HV), 5-hydroxyvalerate (5-HV), and 6-hydroxyhexanoate (6-HH).

For example, the polyhydroxyalkanoate-based resin may be at least one selected from the group consisting of a poly(3-hydroxyhexanoate) (PHHx) and a poly(3-hydroxybutyrate-co-3-hydroxyhexanoate) (PHBH).

When the polyhydroxyalkanoate-based resin comprises the 3-hydroxyhexanoate (3-HH) repeat unit, the mechanical properties, such as tensile strength, of a film can be enhanced as compared with the case where a polyhydroxyalkanoate-based resin comprising a different repeat unit is applied to the film.

The content of the 3-HH repeat unit in the polyhydroxyalkanoate-based resin may be 1% by mole or more, 5% by mole or more, or 7% by mole or more, and may be 30% by mole or less, 20% by mole or less, 15% by mole or less, or 10% by mole or less. For example, the content of the 3-HH repeat unit may be 1% by mole to 30% by mole, 3% by mole to 28% by mole, 5% by mole to 25% by mole, 10% by mole to 23% by mole, or 15% by mole to 22% by mole, based on the total number of moles of repeat units contained in the polyhydroxyalkanoate-based resin. Within the above content range, the hard and soft properties of a polyhydroxyalkanoate-based resin comprising a 3-HH repeat unit can be appropriately controlled. Specifically, since the structure of a 3-HH repeat unit has a long side chain, as the copolymerization ratio of a 3-HH repeat unit increases, the flexibility and elongation of a polyhydroxyalkanoate-based resin generally increase, and the degree of crystallinity may decrease.

According to an embodiment, the second resin may comprise a first poly(3-hydroxybutyrate-co-3-hydroxyhexanoate) having a content of a 3-HH repeat unit of 5% by mole to 15% by mole (e.g., 9% by mole to 15% by mole or 11% by mole to 14% by mole) and a second poly(3-hydroxybutyrate-co-3-hydroxyhexanoate) having a content of a 3-HH repeat unit of 1% by mole to 10% by mole (e.g., 2% by mole to 9% by mole or 4% by mole to 8% by mole) at a weight ratio of 1:10 to 1:1, specifically, at a weight ratio of 1:9 to 1:2, 1:8 to 1:3, 1:5 to 2:3, 1:4 to 2:3, 2.5:7.5 to 3.5:6.5, or 3:7 to 3.5:6.5.

When the weight ratio of the first poly(3-hydroxybutyrate-co-3-hydroxyhexanoate) and the second poly(3-hydroxybutyrate-co-3-hydroxyhexanoate) satisfies the above range, it may be more advantageous in achieving both mechanical strength and processability of a biodegradable film comprising the biodegradable resin composition.

The polyhydroxyalkanoate-based resin is formed by chemical synthesis or polymerizing one or more monomer repeat units present in microorganisms using an enzyme catalyst. It may be crystalline, semi-crystalline, or amorphous depending on its molecular structure. For example, the use of a crystalline polyhydroxyalkanoate-based resin may be more advantageous in terms of the preservation of mechanical strength, moisture permeability, and air permeability of a biodegradable film.

In addition, the polyhydroxyalkanoate-based resin may comprise structural isomers, enantiomers, or geometric isomers.

The polyhydroxyalkanoate-based resin may have a weight average molecular weight (Mw) of 50,000 to 1,000,000, 100,000 to 800,000, 100,000 to 500,000, or 100,000 to 300,000.

The polyhydroxyalkanoate-based resin may have a melting temperature (Tm) of 100°C to 250°C, 120°C to 220°C, or 150°C to 200°C.

The polyhydroxyalkanoate-based resin may have a glass transition temperature (Tg) of -70°C to 70°C, -50°C to 50°C, -30°C to 30°C, or -10°C to 10°C. Since the glass transition temperature of the polyhydroxyalkanoate-based resin is different from that of the polylactic acid-based resin, the crystallinity of the biodegradable resin composition comprising them can be controlled. Specifically, since the glass transition temperature of the polyhydroxyalkanoate-based resin is lower than that of the polylactic acid-based resin, the brittleness of the biodegradable resin composition comprising them can be controlled.

The polyhydroxyalkanoate-based resin may have a melt viscosity of 100 poise to 250 poise, 100 poise to 200 poise, 130 poise to 190 poise, or 150 poise to 180 poise, when measured at 200°C and 100 rad/s using a rheometer (RDS).

According to an embodiment, the content of the second resin may be 5% by weight or more, 10% by weight or more, 15% by weight or more, or 20% by weight or more, and may be 45% by weight or less, 40% by weight or less, 35% by weight or less, or 30% by weight or less, based on the total weight of the first resin and the second resin. Specifically, the biodegradable resin composition may comprise the second resin in an amount of 5% by weight to 45% by weight, 10% by weight to 40% by weight, 15% by weight to 35% by weight, or 20% by weight to 30% by weight, based on the total weight of the first resin and the second resin.

When the content of the second resin is within the above range, the brittleness of the biodegradable resin composition and a biodegradable film or biodegradable molded article comprising the same can be reduced, and the flexibility thereof can be increased, thereby reducing noise levels and enhancing barrier properties including moisture permeability or air permeability.

According to an embodiment, the biodegradable resin composition may comprise 70% by weight to 80% by weight of the first resin and 20% by weight to 30% by weight of the second resin based on the total weight of the first resin and the second resin.

Meanwhile, the biodegradable resin composition according to an embodiment of the present invention may further comprise, in addition to the first resin and the second resin, a third resin comprising an aliphatic polyester resin or an aliphatic-aromatic copolymeric polyester resin different from the polylactic acid-based resin contained in the first resin.

According to an embodiment, the aliphatic polyester-based resin or the aliphatic-aromatic copolymeric polyester-based resin may comprise, for example, at least one selected from the group consisting of a polybutylene adipate terephthalate (PBAT) resin, a polybutylene succinate (PBS) resin, a polybutylene adipate (PBA) resin, a polybutylene succinate-adipate (PBSA) resin, a polybutylene succinate-terephthalate (PBST) resin, a polyhydroxybutyrate-valerate (PHBV) resin, a polycaprolactone (PCL) resin, and a polybutylene succinate adipate terephthalate (PBSAT) resin.

The third resin may be employed in an amount of, for example, greater than 0% by weight to 20% by weight, 1% by weight to 15% by weight, or 1% by weight to 10% by weight, based on the total weight of the biodegradable resin composition.

In addition, according to an embodiment, the biodegradable resin composition may further comprise at least one conventional additive selected from the group consisting of electrostatic agents, antistatic agents, antioxidants, thermal stabilizers, ultraviolet ray blockers, anti-blocking agents, impact-resistant reinforcing agents, and other inorganic lubricants. Such additives may be used within a range that does not impair the effect of the present invention.

### Biodegradable film

The biodegradable film according to an embodiment of the present invention comprises the biodegradable resin composition.

The biodegradable film may have a thickness of 5 µm to 100 µm, 7 µm to 80 µm, 8 µm to 50 µm, 10 µm to 50 µm, 10 µm to 40 µm, or 10 µm to 30 µm.

The barrier properties of the biodegradable film may be expressed in terms of moisture permeability, air permeability, oxygen permeability, and carbon dioxide permeability.

According to an embodiment, the biodegradable film may have a moisture permeability of 100 g/m²/day to 500 g/m²/day, specifically, 150 g/m²/day to 450 g/m²/day, 200 g/m²/day to 400 g/m²/day, 230 g/m²/day to 380 g/m²/day, or 240 g/m²/day to 375 g/m²/day. Here, the thickness of a biodegradable film sample is measured using a thickness measuring device from TOYOSEKI, and the moisture permeability (g/m²/day) is then measured using PERMATRAN-W.

When the moisture permeability satisfies the above range, the biodegradable film can be used as a packaging material that requires excellent barrier properties. Specifically, it may be advantageous for being used as a packaging material for food that requires a certain level of moisture absorption prevention or moisture preservation.

According to an embodiment, the biodegradable film may have an air permeability of 100 cc/m²/day to 750 cc/m²/day, specifically, 150 cc/m²/day to 700 cc/m²/day, 200 cc/m²/day to 680 cc/m²/day, 300 cc/m²/day to 650 cc/m²/day, 350 cc/m²/day to 630 cc/m²/day, or 370 cc/m²/day to 610 cc/m²/day. Here, the thickness of a biodegradable film sample is measured using a thickness measuring device from TOYOSEKI, and the air permeability (cc/m²/day) is then measured using MOCON OX-TRAN.

When the air permeability satisfies the above range, the biodegradable film can be used as a packaging material that requires excellent barrier properties. Specifically, it may be advantageous in blocking oxygen for preventing oxidation of internal food and fresh food such as vegetables with a short shelf life.

According to an embodiment, the biodegradable film may have a noise level of 85 dB or less.

The noise level is an average value (dB) measured when the biodegradable film is cut to a size of A4, 210 mm x 297 mm and placed 15 cm away from a digital noise analyzer in a box of 650 (W) mm × 450 (D) mm × 500 (H) mm made of a polycarbonate, and both ends of the film are held with jigs and repeatedly rotated by 180 degrees and twisted back and forth at a speed of 800 rpm to make noise for 30 seconds or more.

Specifically, the noise level of the biodegradable film may be 83 dB or less, 82 dB or less, 81 dB or less, 80 dB or less, or 79.5 dB or less (e.g., 70 to 83 dB).

In particular, when the noise level of the biodegradable film satisfies the above range, it has the advantage of providing a high-quality packaging material by virtue of its low noise level.

According to an embodiment, the biodegradable film may have a Young's modulus of 390 kgf/mm² or less, 380 kgf/mm² or less, 370 kgf/mm² or less, or 360 kgf/mm² or less. Specifically, the Young's modulus of the biodegradable film may be 150 kgf/mm² to 390 kgf/mm², 180 kgf/mm² to 380 kgf/mm², 200 kgf/mm² to 370 kgf/mm², 230 kgf/mm² to 360 kgf/mm², or 260 kgf/mm² to 360 kgf/mm².

According to ASTM D882, when the biodegradable film is cut to a specimen having a width of 15 mm, mounted with a spacing between chucks of 50 mm, and tested at a tensile speed of 200 mm/minute using a tensile tester (Instron 5566A), the Young's modulus (kgf/mm²) is measured as a slope of the straight line between the starting point of measurement and an elongation of 3%.

The biodegradable fiber may have an average Young's modulus of 370 kgf/mm² or less. For example, the average Young's modulus of the biodegradable film may be 350 kgf/kgf/mm² or less, 330 kgf/kgf/mm² or less, 320 kgf/kgf/mm² or less, or 310 kgf/kgf/mm² or less. Specifically, the average Young's modulus of the biodegradable film may be 180 kgf/kgf/mm² to 370 kgf/kgf/mm², 210 kgf/kgf/mm² to 360 kgf/kgf/mm², 230 kgf/kgf/mm² to 350 kgf/kgf/mm², 250 kgf/kgf/mm² to 330 kgf/kgf/mm², or 260 kgf/kgf/mm² to 310 kgf/kgf/mm². The average Young's modulus is the average value of the Young's modulus in the longitudinal direction (MD) and the Young's modulus in the transverse direction (TD).

When the average Young's modulus of the biodegradable film satisfies the above range, flexibility is excellent, enabling expansion of various uses. Further, processability, moldability, and productivity can be further enhanced. As the biodegradable film comprises both the first resin and the second resin, thereby increasing flexibility, as described above, it is suitable for use as a film for packaging materials.

The biodegradable film may have a tensile strength of 8 kgf/mm² to 15.6 kgf/mm², 8.5 kgf/mm² to 15.5 kgf/mm², 9 kgf/mm² to 15.4 kgf/mm², or 9.6 kgf/mm² to 15.3 kgf/mm².

The biodegradable film may have an elongation of 35% to 150%, 40% to 140%, 45% to 120%, 50% to 120%, or 50% to 118%.

The tensile strength and elongation are measured by cutting the biodegradable film into a specimen having a width of 15 mm and then using a tensile tester (Instron, 5566A) at a tensile speed of 200 mm/minute according to ASTM D882.

The characteristics of the biodegradable film according to an embodiment of the present invention can be efficiently achieved by using the process for preparing a biodegradable film according to an embodiment of the present invention.

Hereinafter, the process for preparing a biodegradable film will be described in detail.

### Process for preparing a biodegradable film

According to an embodiment of the present invention, there is provided a process for preparing a biodegradable film, which comprises melt-extruding a biodegradable resin composition comprising a first resin comprising a polylactic acid-based resin; and a second resin comprising a polyhydroxyalkanoate-based resin to prepare a sheet (step 1); stretching the melt-extruded sheet to prepare a film (step 2); and heat-setting the stretched film (step 3), wherein the polyhydroxyalkanoate-based resin comprises a 3-hydroxyhexanoate (3-HH) repeat unit, and the biodegradable resin composition comprises the second resin in an amount of 10% by weight to 30% by weight based on the total weight of the first resin and the second resin.

In the process for preparing a biodegradable film according to an embodiment of the present invention, a biodegradable resin composition comprising a first resin and a second resin, each of which comprises a specific resin as a main component, is melt-extruded to prepare a sheet, which is then stretched and heat-set. As a result, the moldability, processability, and productivity can be further enhanced, and a biodegradable film suitable for the purpose of the present invention can be prepared in an economical and efficient manner.

In particular, there is a technical significance in that as the content of the second resin is controlled to a specific range in the process for preparing a biodegradable film, the flexibility, noise levels, and barrier properties of the biodegradable film can be improved at the same time while excellent mechanical and optical properties are maintained.

Description of the polylactic acid-based resin and the polyhydroxyalkanoate-based resin contained in the first resin and the second resin, respectively, is as described above.

In addition, depending on the intended use and property design, a third resin and an additive may be further added to the biodegradable resin composition for preparing the biodegradable film in addition to the first resin and the second resin. Description of the third resin and the additive is as described above.

According to an embodiment, the process for preparing a biodegradable film may comprise mixing the first resin and the second resin to obtain a biodegradable resin composition; and melt-extruding the same to form a sheet. In addition, the first resin and the second resin may be mixed and extruded to obtain biodegradable pellets (blended chips), and a biodegradable sheet and film may be obtained using the same.

The melt-extrusion temperature may be, for example, 170°C to 230°C, 170°C to 210°C, 180°C to 210°C, or 190°C to 210°C. The extrusion may utilize a single-screw extruder, a twin-screw extruder, or a T-die.

According to an embodiment, a step of drying the first resin and the second resin before the melt extrusion may be further carried out. Specifically, the drying step may be carried out at 40°C to 130°C or 80°C to 90°C for 4 hours to 24 hours.

Meanwhile, the melt-extruded sheet may be molded through casting, such as electrostatic casting through a casting roll, band casting, or drum casting. The casting temperature may specifically be 5°C to 35°C, 10°C to 30°C, or 15°C to 25°C.

According to an embodiment, the process for preparing a biodegradable film may comprise stretching the melt-extruded sheet to prepare a film. Specifically, the melt-extruded sheet may be biaxially stretched. The biaxial stretching step may comprise preheating, followed by longitudinal stretching of2 times to 4 times, 2.5 times to 3.5 times, or 2.7 times to 3.3 times, in the longitudinal direction (MD) at 40°C to 100°C, 50°C to 90°C, or 60°C to 80°C; and transverse stretching of 3 times to 6 times, 3.2 times to 5.5 times, or 3.5 times to 5 times in the transverse direction (TD) at 50°C to 150°C or 60°C to 150°C.

As the melt-extruded sheet is biaxially stretched in both directions, the physical properties and moldability of the biodegradable film can be further enhanced; thus, high-quality packaging materials can be achieved.

If uniaxial stretching is performed in only one of the longitudinal and transverse directions, the thickness deviation of the biodegradable film is severe, the strength of the direction in which stretching is not performed may decrease, and thermal properties may also deteriorate.

According to an embodiment, the process for preparing a biodegradable film may comprise heat-setting the stretched film (heat-setting step), cooling it (cooling step), and/or winding it (winding step).

The heat-setting step may be carried out, specifically, at 50°C to 150°C, 70°C to 150°C, 100°C to 150°C, or 110°C to 140°C.

The cooling step may be carried out at 50°C or lower, 40°C or lower, 30°C or lower, 25°C or lower, 5°C to 50°C, 10°C to 30°C, 15°C to 25°C, or 20°C to 25°C.

When the biodegradable film is prepared by the preparation process of an embodiment of the present invention, it is economical and efficient, and a biodegradable film having the desired properties can be efficiently provided.

### Biodegradable molded article

The biodegradable molded article according to an embodiment of the present invention comprises the biodegradable resin composition. That is, the biodegradable molded article is prepared from the biodegradable resin composition.

Specifically, the biodegradable molded article may be prepared by molding the biodegradable resin composition by a method known in the art such as extrusion or injection, and the biodegradable molded article may be an injection molded article, an extrusion molded article, a thin film molded article, or a blown molded article, but it is not limited thereto.

According to an embodiment, when the biodegradable molded article is prepared by injection molding, the mold temperature may be set to about 130°C or higher. When the biodegradable molded article is in the form of a film or sheet, it may be prepared into various films or sheets by methods such as unstretching, uniaxial stretching, and biaxial stretching. When the biodegradable molded article is a fiber, it may be various fibers such as undrawn yarn, drawn yarn, or superdrawn yarn, and it may be used as fabrics, knitted fabrics, nonwoven fabrics (spunbond, meltblown, staple), ropes, or nets.

The biodegradable molded article may be used as electrical components such as computer parts, electronic components, building materials, automobile parts, machine parts, coatings for daily necessities or parts that come into contact with chemicals, and industrial chemical-resistant fibers.

In addition, the biodegradable molded article may be in the form of a film or sheet that can be used as agricultural mulching films, disposable gloves, or food packaging materials, in the form of a fiber that can be used as fabrics, knitted fabrics, nonwoven fabrics, ropes, or in the form of a container that can be used as a container for food packaging such as a lunch box.

The biodegradable molded article may be an automotive and industrial headlamp bezel.

In particular, the biodegradable molded article has excellent barrier properties and low noise levels and can exhibit an excellent quality that satisfies the mechanical properties or thermal properties required depending on the intended use.

In addition, the biodegradable molded article prepared may be biodegraded by 60% to 100% within 45 days to 180 days in a natural state and may be composted at a constant temperature of 20°C to 60°C and a constant humidity of 30% to 90%.

### Mode for the Invention

### [Example]

Hereinafter, the present invention will be described in more detail with reference to examples. But the scope thereof is not limited thereto.

### Example 1: Preparation of a biodegradable film

As the first resin, a polylactic acid resin (Nature Works LLC, 4032D) having a D-lactic acid content of about 1.4% and a melt viscosity of about 8,770 poise under the conditions of about 210°C and 100 rad/s was prepared.

As the second resin, a mixed resin was prepared in which a poly(3-hydroxybutyrate-co-3-hydroxyhexanoate) (PHBH) resin (KANEKA, AONILEX, 151C) having a melt viscosity of about 176 poise under the conditions of about 200°C and 100 rad/s and a 3-HH copolymerization ratio of 13% by mole and a poly(3-hydroxybutyrateco-3-hydroxyhexanoate) (PHBH) resin (KANEKA, AONILEX, X331N) having a melt viscosity of about 142 poise under the conditions of about 200°C and 100 rad/s and a 3-HH copolymerization ratio of 8% by mole were mixed at a weight ratio (151C:X331N) of 3:7.

The first resin and the second resin were mixed according to the composition shown in Table 1 below to prepare a mixed resin. The mixed resin was melt-extruded through a single-screw extruder and a T-die extruder at a temperature of 170°C to 210°C and then electrostatically cast onto a casting roll cooled to 15°C to 25°C to obtain an unstretched biodegradable sheet. The unstretched biodegradable sheet was stretched in the longitudinal direction (MD) at 60°C to 80°C and in the transverse direction (TD) at 60°C to 150°C according to the stretching ratio in shown Table 1. Then, the stretched sheet was heat-set at 140°C to 150°C in a heat treatment section of a tenter and cooled to 50°C to prepare a biodegradable film having a thickness shown in Table 1.

### Examples 2 to 4

As shown in Table 1 below, a biodegradable film was prepared in the same manner as in Example 1, except that the weight ratio of the first resin and the second resin contained in the final biodegradable film and the film-forming conditions were changed.

### Comparative Example 1

As shown in Table 1 below, a biodegradable film was prepared in the same manner as in Example 1, except that the first resin alone, which was a polylactic-based acid resin, was used.

### Comparative Examples 2 and 3

As shown in Table 1 below, a biodegradable film was prepared in the same manner as in Example 1, except that as the second resin, an amorphous polyhydroxyalkanoate (a-PHA) resin (CJ CheilJedang, PHACT) was used in which 3-hydroxybutyrate (3-HB) and 4-hydroxybutyrate (4-HB) were copolymerized and the copolymerization ratio of 4-hydroxybutyrate (4-HB) was 30% by mole to 60% by mole.

The composition of each layer and film-forming conditions for the biodegradable films prepared according to Examples 1 to 4 and Comparative Examples 1 to 3 are summarized in Table 1 below.

**[Table 1]**

| (Unit: % by weight) | C. Ex. 1 | Ex. 1 | Ex. 2 | Ex. 3 | Ex. 4 | C. Ex. 2 | C. Ex. 3 |
|---|---|---|---|---|---|---|---|
| First resin (PLA) | 100% | 80% | 80% | 70% | 70% | 90% | 84% |
| Second resin (PHBH) | - | PHBH 20% | PHBH 20% | PHBH 30% | PHBH 30% | aPHA 10% | aPHA 16% |
| PHBH composition (151C:X331) | - | 3:7 | 3:7 | 3:7 | 3:7 | - | - |
| Film stretching ratio (MD × TD) | 2×3 | 2×3 | 3×3 | 2×3 | 3×3 | 3×3 | 3×3 |
| Thickness (µm) | 32 | 29 | 28 | 25 | 22 | 25 | 28 |

### Test Example

The biodegradable films prepared according to the Examples and Comparative Examples were each measured for physical properties and performance in the following manner. The results are shown in Table 2 below.

### (1) Thickness, air permeability, and moisture permeability

The thickness of each biodegradable film sample was measured using a thickness measuring device from TOYOSEKI, and the air permeability (cc/m²/day) and moisture permeability (g/m²/day) were then measured using MOCON OX-TRAN and PERMATRAN-W, respectively.

### (2) Noise level

When each of the biodegradable films prepared in the Examples and Comparative Examples was cut to a size of A4, 210 mm × 297 mm and placed 15 cm away from a digital noise analyzer (Cirrus Research PlC, model name: CR-162C) in a box of 650 (W) mm × 450 (D) mm × 500 (H) mm made of a polycarbonate, and both ends of the film were held with jigs and repeatedly rotated by 180 degrees and twisted back and forth at a speed of 800 rpm to make noise for 30 seconds or more, an average value (dB) was calculated from the measured values (dB).

### (3) Young's modulus

According to ASTM D882, when each biodegradable film was cut to a specimen having a width of 15 mm, mounted with a spacing between chucks of 50 mm, and tested at a tensile speed of 200 mm/minute using a tensile tester (Instron 5566A), the Young's modulus (kgf/mm²) was measured as a slope of the straight line between the starting point of measurement and an elongation of 3%. Here, the average Young's modulus is the average value of the Young's modulus in the longitudinal direction (MD) and the Young's modulus in the transverse direction (TD).

### (4) Tensile strength and elongation

The tensile strength (kgf/mm²) and elongation (%) were measured by cutting each biodegradable film into a specimen having a width of 15 mm and then using a tensile tester (Instron, 5566A) at a tensile speed of 200 mm/minute according to ASTM D882.

**[Table 2]**

| | | C. Ex. 1 | Ex. 1 | Ex. 2 | Ex. 3 | Ex. 4 | C. Ex. 2 | C. Ex. 3 |
|---|---|---|---|---|---|---|---|---|
| Tensile strength (kgf/mm²) | MD | 12 | 11 | 12 | 9 | 11 | 14 | 13 |
| | TD | 15 | 13 | 13 | 12 | 15 | 13 | 11 |
| Elongation (%) | MD | 101 | 107 | 96 | 113 | 118 | 112 | 111 |
| | TD | 63 | 64 | 64 | 50 | 52 | 85 | 91 |
| Young's modulus (kgf/mm²) | MD | 350 | 268 | 285 | 268 | 266 | 303 | 307 |
| | TD | 398 | 263 | 279 | 351 | 311 | 332 | 280 |
| Noise level (dB) | | 85 | 79 | 79 | 77 | 77 | 77 | 77 |
| Air permeability (cc/m²/day) | | 759 | 606 | 524 | 372 | 457 | 459 | 456 |
| Moisture permeability (g/m²/day) | | 282 | 370 | 339 | 240 | 317 | 320 | 318 |

As can be seen from the above table, the biodegradable films of Examples 1 to 4, when compared with Comparative Example 1 in which 100% by weight of the first resin was employed, had a reduced average Young's modulus while maintaining the tensile strength and elongation, indicating high flexibility, and the noise level was significantly improved by virtue of the enhanced flexibility.

In contrast, the biodegradable films of Comparative Examples 2 and 3, in which an amorphous polyhydroxyalkanoate resin was used as the second resin; thus, they showed improvements in noise levels, air permeability, and moisture permeability as compared with Comparative Example 1, while they showed a tendency for the tensile strength in the transverse direction to decrease and the elongation to increase. They had a disadvantage in that they could easily stretch in the transverse direction when applied to products.

Accordingly, the biodegradable film according to an embodiment of the present invention not only improves flexibility and noise levels, but also maintains mechanical properties required for a product, whereby it is suitable for packaging purposes, and it also has excellent barrier properties including air permeability and moisture permeability. It is highly suitable for packaging applications that require high barrier properties, such as food and electronic products.

## Claims

1. A biodegradable resin composition, which comprises a first resin comprising a polylactic acid-based resin; and a second resin comprising a polyhydroxyalkanoate-based resin,
wherein the polyhydroxyalkanoate-based resin comprises a 3-hydroxyhexanoate (3-HH) repeat unit, and
the biodegradable resin composition comprises the second resin in an amount of 10% by weight to 30% by weight based on the total weight of the first resin and the second resin.

2. The biodegradable resin composition of claim 1, wherein the polyhydroxyalkanoate-based resin further comprises at least one repeat unit selected from the group consisting of 2-hydroxybutyrate (2-HB), 3-hydroxybutyrate (3-HB), 3-hydroxypropionate (3-HP), 3-hydroxyvalerate (3-HV), 3-hydroxyheptanoate (3-HHep), 3-hydroxyoctanoate (3-HO), 3-hydroxynonanoate (3-HN), 3-hydroxydecanoate (3-HD), 3-hydroxydodecanoate (3-HDd), 4-hydroxybutyrate (4-HB), 4-hydroxyvalerate (4-HV), 5-hydroxyvalerate (5-HV), and 6-hydroxyhexanoate (6-HH).

3. The biodegradable resin composition of claim 1, wherein the content of the 3-HH repeat unit is 1% by mole to 30% by mole based on the total number of moles of repeat units contained in the polyhydroxyalkanoate-based resin.

4. The biodegradable resin composition of claim 1, wherein the second resin comprises a first poly(3-hydroxybutyrate-co-3-hydroxyhexanoate) having a content of the 3-HH repeat unit of 5% by mole to 15% by mole and a second poly(3-hydroxybutyrate-co-3-hydroxyhexanoate) having a content of the 3-HH repeat unit of 1% by mole to 10% by mole at a weight ratio of 1:10 to 1:1.

5. The biodegradable resin composition of claim 1, which comprises 70% by weight to 80% by weight of the first resin and 20% by weight to 30% by weight of the second resin based on the total weight of the first resin and the second resin.

6. A biodegradable film, which comprises the biodegradable resin composition of claim 1 and has a moisture permeability of 100 g/m²/day to 500 g/m²/day and an air permeability of 100 cc/m²/day to 750 cc/m²/day.

7. The biodegradable film of claim 6, wherein the biodegradable film has a noise level of 85 dB or less as defined below:
the noise level is an average value (dB) measured when the biodegradable film is cut to a size of A4, 210 mm × 297 mm and placed 15 cm away from a digital noise analyzer in a box of 650 (W) mm × 450 (D) mm × 500 (H) mm made of a polycarbonate, and both ends of the film are held with jigs and repeatedly rotated by 180 degrees and twisted back and forth at a speed of 800 rpm to make noise for 30 seconds or more.

8. The biodegradable film of claim 6, wherein the biodegradable film has an average Young's modulus of 370 kgf/mm² or less.

9. A process for preparing a biodegradable film, which comprises:
melt-extruding a biodegradable resin composition comprising a first resin comprising a polylactic acid-based resin; and a second resin comprising a polyhydroxyalkanoate-based resin to prepare a sheet;
stretching the melt-extruded sheet to prepare a film; and
heat-setting the stretched film,
wherein the polyhydroxyalkanoate-based resin comprises a 3-hydroxyhexanoate (3-HH) repeat unit, and
the biodegradable resin composition comprises the second resin in an amount of 10% by weight to 30% by weight based on the total weight of the first resin and the second resin.

10. A biodegradable molded article, which comprises the biodegradable resin composition of claim 1.
